# EUROPÄISCHE PATENTSCHRIFT

(11) **EP 1 703 186 B1**
(45) Veröffentlichungstag und Bekanntmachung des Hinweises auf die Patenterteilung: **22.07.2009**
(21) Anmeldenummer: 05006006.0
(22) Anmeldetag: 18.03.2005
(51) Int. Cl.: F16L 1/10

(54) **Vorrichtung und Verfahren zum Zusammensetzen von Rohrleitungsabschnitten und Pipeline hergestellt nach einem solchen Verfahren**
Device and method for connecting pipe sections and pipeline produced with such method
Dispositif et méthode pour l'assemblage de sections de tuyaux et tuyau produit par ladite méthode

(43) Veröffentlichungstag der Anmeldung: 20.09.2006
(73) Patentinhaber: Max Streicher GmbH & Co. Kommanditgesellschaft auf Aktien, 94469 Deggendorf (DE)
(72) Erfinder: Huber, Siegmund, 94533 Buchhofen (DE)
(74) Vertreter: Manitz, Finsterwald & Partner GbR

(56) Entgegenhaltungen:
- US-A- 4 674 926
- US-A- 5 363 541
- US-A- 5 437 517

## Beschreibung

Die vorliegende Erfindung betrifft eine Vorrichtung zum Zusammensetzen von Rohrleitungsabschnitten, wie sie insbesondere beim Verlegen von Pipelines verwendet wird. Weiterhin ist die Erfindung auf ein Verfahren zum Verbinden von Rohrleitungsabschnitten gerichtet.

Bei der Herstellung von Pipelines unterscheidet man den so genannten "Vorbau", bei dem über eine lange freie Strecke ein Rohrleitungsabschnitt an den anderen angesetzt und mit diesem verschweißt wird, und die so genannten "Sonderbauwerke", bei denen die Rohrleitungsabschnitte über oder unter Hindernisse, wie beispielsweise Straßen, Flüsse oder dergleichen, geführt werden müssen. Beim Vorbau werden die Rohrleitungsabschnitte meist in vorher aufgegrabene Erdrinnen verlegt, während bei den Sonderbauwerken oftmals zusätzliche Elemente, wie z. B. Schutzrohre verlegt werden, durch die die Rohrleitungsabschnitte dann hindurchgeführt werden.

Grundsätzlich ist es bei der Herstellung von Pipelines erforderlich, dass die miteinander zu verbindenden Rohrleitungsabschnitte mit ihren Enden so aneinander gesetzt werden, dass eine exakte Zentrierung der Rohrleitungsabschnitte gewährleistet ist. Nur bei einer solchen exakten Zentrierung können die Enden der aneinander stoßenden Rohrleitungsabschnitte zuverlässig miteinander verbunden, insbesondere verschweißt werden, wobei hier üblicherweise Orbitalschweißvorrichtungen zum Einsatz kommen.

Zum Zentrieren der Rohrleitungsabschnitte werden bei den bekannten Verfahren Innenzentrierungen verwendet. Dabei werden die aneinander zu setzenden Rohrleitungsabschnitte zunächst über so genannte Seitenbäume, das sind Bagger mit speziell ausgebildeten Hebearmen, in eine annähernd zentrierte Position gebracht. Jeder der Rohrleitungsabschnitte wird dabei durch einen oder durch mehrere Seitenbäume in der gewünschten Position gehalten. Anschließend wird die Innenzentrierung in das Innere eines der Rohrleitungsabschnitte eingesetzt und bis zur Verbindungsstelle zwischen den beiden Rohrleitungsabschnitten verfahren. Die Innenzentrierungen besitzen üblicherweise hydraulisch oder pneumatisch radial nach außen verfahrbare Kolben, die sternförmig nach außen verfahren werden können, bis sie an der Innenseite der Rohrleitungsabschnitte anliegen. Da die Innenzentrierung über die Verbindungsstelle von einem Rohrleitungsabschnitt in den anderen Rohrleitungsabschnitt hineinragt, werden beide Rohrleitungsabschnitte von innen mit den Kolben beaufschlagt, so dass eine Zentrierung der Rohrleitungsabschnitte zueinander erfolgt.

Die Zentrierung über diese Innenzentriervorrichtungen besitzen jedoch mehrere Nachteile. Zum einen sind die vorbereitende Positionierung sowie das Halten der Rohrleitungsabschnitte über mehrere Seitenbäume relativ aufwändig, da sowohl die Rohrleitungsabschnitte als auch die Seitenbäume ein sehr hohes Gewicht von mehreren zig Tonnen besitzen. Zum anderen ist das Einbringen der Innenzentrierrichtungen in das Innere der Rohrleitungsabschnitte und insbesondere nach erfolgtem Verschweißen das Wiederentnehmen der Innenzentrierungen oftmals mit großem Aufwand verbunden, da die Innenzentrierungen bei langen Rohrleitungsabschnitten bis zu dem nächsten offenen Ende verfahren werden müssen.

Ein weiteres Problem tritt insbesondere dann auf, wenn ein Rohrleitungsabschnitt zum Verbinden zweier unbewegbarer Rohrleitungsabschnitte zwischen diese eingesetzt werden muss. Dies ist beispielsweise immer dann der Fall, wenn am Ende eines langen Vorbaus, der eine Länge von mehreren Kilometern aufweisen kann, der Anschluss dieses Vorbaus über einen Rohrleitungsabschnitt an einem feststehenden Ende eines Sonderbauwerks erfolgt oder wenn zwei aufeinander zulaufende lange Vorbauabschnitte über einen Rohrleitungsabschnitt miteinander verbunden werden müssen. In diesen Fällen ist es erforderlich, dass der einzusetzende Rohrleitungsabschnitt exakt auf eine Länge abgeschnitten wird, die durch den Abstand zwischen den beiden miteinander zu verbindenden Rohrleitungsenden definiert ist. Ist der Rohrleitungsabschnitt zu lang, so kann er nicht in den Abstand zwischen die beiden zu verbindenden Enden eingesetzt werden, während bei einem zu kurzen Abschneiden ein Spalt entsteht und eine Verbindung nicht möglich ist.

Das exakte Abschneiden ist dabei eine manuelle, anspruchsvolle Arbeit, die eine große Erfahrung voraussetzt, da der einzusetzende Rohrleitungsabschnitt aufgrund seines ursprünglichen Übermaßes nicht in den Zwischenraum zwischen die zu verbindenden Enden eingesetzt werden kann, sondern der Abstand zwischen diesen Enden exakt vermessen und auf den einzusetzenden Rohrleitungsabschnitt übertragen werden muss. Eine solche exakte Vermessung ist gerade bei den im Pipelinebau meist undefinierten, unterschiedlichen Umgebungssituationen schwierig.

Aus der US 5,363,541 A sind eine Vorrichtung gemäß dem Oberbegriff des Anspruchs 1 bzw. ein entsprechendes Verfahren bekannt.

Es ist eine Aufgabe der vorliegenden Erfindung, eine Vorrichtung der eingangs genannten Art anzugeben, mit der eine hochpräzise Zentrierung von Rohrleitungsabschnitten sowie ein sicheres und unkompliziertes Verbinden von unverschiebbaren Rohrleitungsabschnitten möglich ist. Weiterhin soll ein entsprechendes Verfahren angegeben werden.

Ausgehend von einer Vorrichtung der eingangs genannten Art wird diese Aufgabe durch eine Vorrichtung mit den Merkmalen des Anspruchs 1 gelöst. Es ist ein gemeinsames Basisteil vorgesehen, an dem zumindest zwei außen liegende Halteelemente sowie ein zwischen diesen angeordnetes, innen liegendes Halteelement bewegbar angeordnet sind, wobei die Halteelemente jeweils zum Ergreifen und Positionieren eines Rohrleitungsabschnitts ausgebildet sind, wobei an dem Basisteil zwischen den beiden außen liegenden Halteelementen zumindest eine Schneidvorrichtung vorgesehen ist, wobei die Halteelemente gegenüber dem Basisteil sowie gegeneinander so bewegbar sind, dass zwei von den Halteelementen gehaltene äußere Rohrleitungsabschnitte in einem ersten vorgegebenen Abstand zueinander zentrierbar sind, wobei durch Abschneiden von einem oder beiden der einander zugewandter Enden der äußeren Rohrleitungsabschnitte mittels der Schneidvorrichtung ein zweiter definiert vorgegebener Abstand zwischen den Rohrleitungsabschnitten einstellbar ist und wobei über das innen liegende Halteelement ein als Passstück vorgefertigter innerer Rohrleitungsabschnitt in den Zwischenraum zwischen den beiden äußeren Rohrleitungsabschnitten einsetzbar ist, wobei das Passstück durch das innen liegende Halteelement zu den beiden äußeren Rohrleitungsabschnitten zentrierbar ist.

Der das Verfahren betreffende Teil wird ausgehend von einem eingangs genannten Verfahren erfindungsgemäß durch ein Verfahren mit den Merkmalen des Anspruchs 16 gelöst. Es werden zwei äußere Rohrleitungsabschnitte in einem ersten vorgegebenen Abstand zueinander zentriert, wobei eines oder beide der einander zugewandten Enden der beiden äußeren Rohrleitungsabschnitte so abgeschnitten werden, wobei ein zweiter definiert vorgegebener Abstand zwischen den Rohrleitungsabschnitten erzeugt wird, wobei ein als Passstück vorgefertigter innerer Rohrleitungsabschnitt in den Zwischenraum zwischen den beiden äußeren Rohrleitungsabschnitten zentriert zu diesen eingesetzt wird und wobei die äußeren Rohrleitungsabschnitte mit dem dazwischen liegenden inneren Rohrleitungsabschnitt verbunden werden.

Mit der erfindungsgemäßen Vorrichtung wird somit beim Verbindung von Rohrleitungsabschnitten eine Standardsituation geschaffen, die auch bei den im Pipelinebau üblicherweise vorhandenen unwegsamen und undefinierten Umgebungssituationen eine exakte und standardisierte Verbindung von einzelnen Rohrleitungsabschnitten ermöglicht, die in einem automatisierten Prozess erzeugt werden kann. Mit der erfindungsgemäßen Vorrichtung werden für die Verbindung von zwei Rohrleitungsabschnitten in allen Fällen immer die gleichen Voraussetzungen geschaffen, wodurch Probleme vermieden und eine gleichmäßig hohe Qualität der Verbindungen gewährleistet werden können.

Die als Passstücke vorgefertigten inneren Rohrleitungsabschnitte besitzen immer die exakt gleiche Länge, so dass bei einer entsprechenden Verbindung ein solches Passstück nicht erst hergestellt werden muss, was bei den im Pipelinebau üblicherweise vorhandenen Umgebungsbedingungen in vielen Fällen nicht zu der gewünschten exakten Länge des Passstückes führen würde. Zur Erzeugung der Verbindung ist es lediglich erforderlich, dass die zu verbindenden Enden der außen liegenden Rohrleitungsabschnitte in einem Abstand zueinander positioniert werden, der kleiner als die Länge des Passstücks ist. Eine exakte Ausrichtung der Enden der außen liegenden Rohrleitungsabschnitte ist jedoch nicht erforderlich. Dadurch, dass die Halteelemente an einem gemeinsamen Basisteil vorgesehen sind, können sie gegenüber dem Basisteil so bewegbar ausgebildet sein, dass die nur grob vorpositionierten Rohrleitungsabschnitte von den außen liegenden Halteelementen erfasst und exakt zueinander zentriert werden können. Durch den gemeinsamen Bezugspunkt sind die von den Halteelementen erfassten Rohrleitungsabschnitte exakt zueinander zentriert und können nun über die ebenfalls an dem Basisteil vorgesehenen Schneidvorrichtung exakt auf den zweiten definiert vorgegebenen Abstand abgeschnitten werden, der üblicherweise genau der Länge des vorgefertigten Passstücks entspricht.

Durch den gemeinsamen Bezugspunkt sind die erforderlichen Operationen trotz der üblicherweise undefinierten Umgebungssituation mit hoher Präzision möglich. Nach Einsetzen des Passstücks in den Zwischenraum zwischen den beiden äußeren Rohrleitungsabschnitten ist dies, wiederum aufgrund des gemeinsamen Bezugspunkts der einzelnen Halteelemente, exakt zu den beiden äußeren Rohrleitungsabschnitten zentrierbar und kann, aufgrund der exakten Vorfertigung des Passstücks sowie der exakten Erzeugung des definiert vorgegebenen Abstands zwischen den Rohrleitungsabschnitten mit diesen verbunden, beispielsweise verschweißt werden.

Nach einer vorteilhaften Ausführungsform der Erfindung sind die Halteelemente zum automatischen Zentrieren der Rohrleitungsabschnitte ausgebildet. Eine sehr einfache automatische Zentrierung wird dadurch erreicht, dass die Halteelemente gegenüber dem Basisteil, insbesondere um eine gemeinsame Achse, verschwenkbar ausgebildet sind. Insbesondere wenn die verschwenkbaren Halteelemente die gleiche Länge besitzen, so dass der wirksame Halteabstand, d. h. der Abstand zwischen der Schwenkachse des Halteelements und der Mittelachse eines gehaltenen Rohrleitungsabschnitts, für zwei Halteelemente gleich groß ist, so werden zwei von den beiden Halteelementen gehaltene Rohrleitungsabschnitte automatisch exakt zueinander zentriert, wenn sich die Halteelemente in der gleichen Winkelposition befinden. Zum Zentrieren ist es daher lediglich erforderlich, dass die Halteelemente in die gleiche Winkelposition verschwenkt werden, um eine automatisch zentrierte Ausrichtung der gehaltenen Rohrleitungsabschnitte zu erreichen. Grundsätzlich können die Halteelemente gegenüber dem Basisteil jedoch auch auf andere Weise bewegbar, z.B. verschiebbar sein. Die automatische Zentrierung kann dann durch eine geeignete Ansteuerung der Halteelemente erfolgen.

Bevorzugt umfassen die Halteelemente Halteabschnitte zum Ergreifen der Außenseite der Rohrleitungsabschnitte. Diese Halteabschnitte können dabei beispielsweise als Greifelemente, insbesondere als Greifzangen oder Greifbacken, und/oder als Vakuumgreifer bzw. Vakuumlift ausgebildet sein. Insbesondere sind die Halteabschnitte dabei so auszubilden, dass der Querschnittsmittelpunkt eines gehaltenen Rohrleitungsabschnitts bei einem vorgegebenen Durchmesser des Rohrleitungsabschnitts automatisch an derselben Position bezogen auf den Halteabschnitt zu liegen kommt.

Nach einer weiteren vorteilhaften Ausführungsform der Erfindung ist der Halteabschnitt eines Halteelements gegenüber dem restlichen Bereich des Halteelements verkippbar ausgebildet. Auf diese Weise können auch Rohrleitungsabschnitte mit schräg geschnittenen Enden zueinander zentriert werden, wenn beispielsweise die Pipeline mit einer Kurve verlegt wird oder ausgehend von einem horizontalen Pipelineverlauf der nächste Rohrleitungsabschnitt schräg nach oben oder nach unten geführt werden muss, um beispielsweise eine entsprechende Bodenunebenheit zu überbrücken.

Durch das Verkippen der Halteabschnitte eines Halteelements gegenüber dem restlichen Bereich des Halteelements kann ein definierter Winkel zwischen zwei aufeinander folgenden Rohrleitungsabschnitten, beispielsweise zwischen einem feststehenden Rohrleitungsabschnitt und einem als Passstück vorgefertigten Rohrleitungsabschnitt eingestellt werden, so dass auch in diesem Fall eine exakte Zentrierung der schräg zueinander verlaufenden Rohrleitungsabschnitte ermöglicht wird. In diesem Fall ist unter Zentrierung nicht die fluchtende Aneinanderreihung von Rohrleitungsabschnitten zu verstehen, sondern lediglich die exakte Ausrichtung der Rohrleitungsabschnitte, so dass die Querschnittsmittelpunkte der schräg abgeschnittenen Enden aufeinander zu liegen kommen. Für solche Eckverbindungen können Passstücke mit bestimmten vordefinierten schrägen Enden vorgefertigt sein, wobei über die erfindungsgemäß vorgesehene Schneidvorrichtung das Ende eines der äußeren Rohrleitungsabschnitte exakt mit der gleichen Schräge abgeschnitten werden kann, so dass eine präzise Verbindung ermöglicht wird.

Nach einer weiteren vorteilhaften Ausführungsform der Erfindung ist an dem Basisteil, insbesondere zwischen den Halteelementen, zumindest eine Schweißvorrichtung vorgesehen. Auf diese Weise kann mit der erfin-dungsgemäßen Vorrichtung nicht nur das Zentrieren der Rohrleitungsabschnitte sowie das Einsetzen eines Passstücks, sondern auch das Verschweißen der zentrierten Rohrleitungsabschnitte erfolgen.

Die Schweißvorrichtung ist bevorzugt als Laserschweißvorrichtung ausgebildet. Grundsätzlich ist jedoch die Ausbildung auch als Schutzgasschweißvorrichtung, als Lichtbogenschweißvorrichtung oder als sonstige geeignete Schweißvorrichtung möglich.

Nach einer weiteren bevorzugten Ausführungsform der Erfindung ist die Schweißvorrichtung als Orbitalschweißvorrichtung ausgebildet. Auf diese Weise kann die Verbindungsnaht zwischen zwei zentrierten Rohrleitungsabschnitten in einem einzigen Arbeitsgang hergestellt werden.

Je nach Bedarf können eine oder mehrere Schweißvorrichtung vorgesehen sein. Ist nur eine Schweißvorrichtung vorgesehen, so ist diese vorzugsweise beweglich, insbesondere zwischen den beiden außen liegenden Halteelementen verfahrbar angeordnet. Auf diese Weise kann über die Schweißvorrichtung zunächst das eine und dann das andere Ende des Passstücks mit den äußeren Rohrleitungsabschnitten verschweißt werden. Sind zwei oder mehr Schweißvorrichtung vorgesehen, so können die beiden Schweißverbindungen in einem Arbeitsgang hergestellt werden.

Insbesondere, wenn die Verbindung zwischen den Rohrleitungsabschnitten über das so genannte Laserschweißen erfolgt, sind die bekannten Innenzentriervorrichtungen nur bedingt einsetzbar. Beim Laserschweißen ist es erforderlich, dass die Enden der zu verbindenden Rohrleitungsabschnitte unter Vorspannung aneinander anliegen. Eine solche Vorspannung ist mit den bekannten Innenzentriervorrichtungen nicht erreichbar, da die hydraulischen oder pneumatischen Abstützelemente lediglich radial nach außen wirkende Kräfte auf die Rohrleitungsabschnitte übertragen können. Nach einer weiteren vorteilhaften Ausführungsform der Erfindung sind daher die Halteelemente gegeneinander so bewegbar, dass zwei zueinander zentrierte, von den Halteelementen gehaltene Rohrleitungsabschnitte unter Vorspannung gegeneinander anpressbar sind. Bevorzugt sind die Halteelemente dabei entlang des Basisteils, insbesondere entlang einer Längsachse des Basisteils bzw. entlang der Schwenkachse der Halteelemente, gegeneinander verfahrbar ausgebildet. Dabei können entweder nur eines der Halteelemente oder mehrer bzw. alle Halteelemente entlang des Basisteils verfahrbar sein. Durch diese Verfahrbarkeit sowie die Anordnung der Halteelemente an einem gemeinsamen Basisteil wird erreicht, dass die von den Halteelementen gehaltenen äußeren und inneren Rohrleitungsabschnitte mit einer genau definierten Vorspannung aneinander gepresst werden können, so dass die Rohrleitungsabschnitte über das Laserschweißverfahren miteinander verbunden werden können.

Nach einer weiteren bevorzugten Ausführungsform der Erfindung kann die Schneidvorrichtung beispielsweise einen Plasmabrenner oder eine sonstige geeignete Schneideinheit umfassen.

Sowohl die Schweißvorrichtung als auch die Schneidvorrichtung können entlang des Basisteils verfahrbar ausgebildet sein, um auf diese Weise die Schneidvorrichtung bzw. die Schweißvorrichtung an die gewünschte Position verbringen zu können. Darüber hinaus können die Schneid- und die Schweißvorrichtung in einer kombinierten Schneid-/Schweißvorrichtung zusammengefasst oder getrennt voneinander ausgebildet sein.

Nach einer weiteren vorteilhaften Ausführungsform der Erfindung sind an dem Basisteil vier, fünf oder mehr Halteelemente vorgesehen. Insbesondere bei längeren äußeren Rohrleitungsabschnitten können mehr als nur drei Halteelemente vorgesehen sein, um eine exakt waagerechte Ausrichtung der gehaltenen äußeren Rohrleitungsabschnitte zu ermöglichen, ohne dass zusätzliche Haltevorrichtungen, wie beispielsweise Seitenbäume oder Auflager notwendig sind.

Vorteilhaft ist die Vorrichtung zur Montage an einem insbesondere verfahrbaren Unterbau, beispielsweise an einem Standardbagger oder an einer Standardraupe, ausgebildet. Durch diese modulare Bauweise ist die erfindungsgemäße Vorrichtung kostengünstig herstellbar. Zum anderen ist sie sehr flexibel einsetzbar, da sie insbesondere mobil einsetzbar ist und zusammen mit dem Unterbau verfahren werden kann.

Eine erfindungsgemäß hergestellte Pipeline umfasst eine Vielzahl von Rohrleitungsabschnitten, die gemäß dem erfindungsgemäßen Verfahren jeweils über ein vorgefertigtes Passstück miteinander verbunden sind. Dadurch wird ein weitgehend automatisierter Herstellungsprozess ermöglicht, selbst wenn die Umgebungsbedingungen stark variieren. Insbesondere ist es vorteilhaft, wenn alle Rohrleitungsabschnitte mit dem erfindungsgemäßen Verfahren über ein vorgefertigtes Passstück miteinander verbunden sind.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben, in diesen zeigen:
- Fig. 1 bis 5: eine erfindungsgemäß ausgebildete Vorrichtung zum Zusammensetzen von Rohrleitungsabschnitten während fünf verschiedener Arbeitsschritte und
- Fig. 6 und 7: die Vorrichtung nach den Fig. 1 bis 5 in der Seitenansicht während zwei verschiedener Arbeitsschritte.

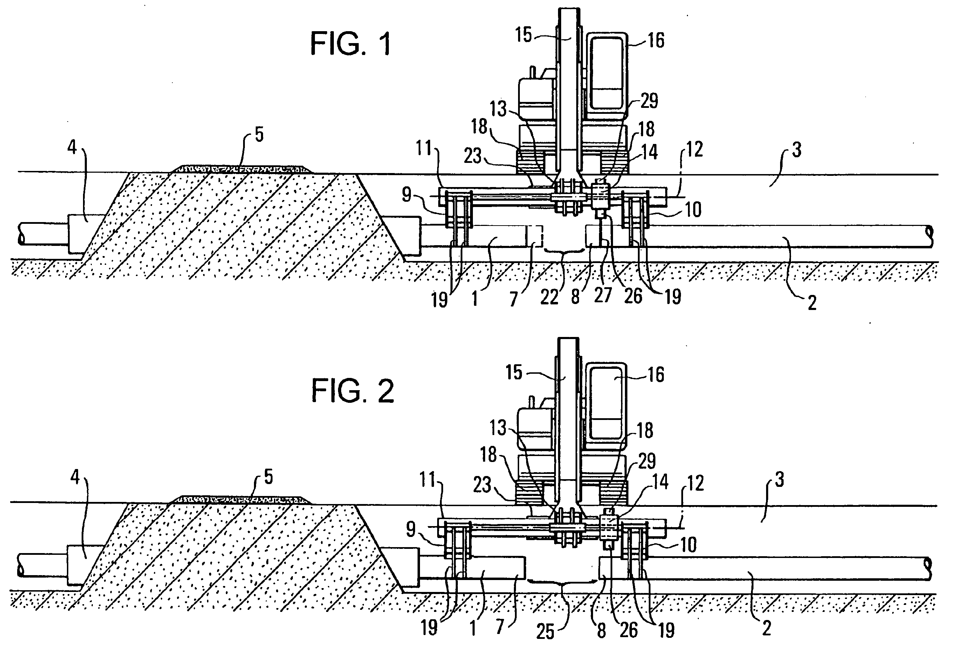

Fig. 1 zeigt zwei Rohrleitungsabschnitte 1, 2, die zum Erzeugen einer Pipeline zentriert aneinandergesetzt und miteinander verschweißt werden sollen. Der Rohrleitungsabschnitt 2 stellt dabei das Ende eines Vorbaus, d. h. eines aus vielen einzelnen Rohrleitungsabschnitten zusammengesetzten Pipelineabschnitts dar, der in einem im Erdboden ausgehobenen Graben 3 verlegt ist.

Der Rohrleitungsabschnitt 1 ist Teil eines Sonderbauwerks und ist durch ein Schutzrohr 4 geführt, das zur Unterquerung einer Straße 5 unterhalb des Straßenaufbaus durch den Erdboden verlegt ist.

Sowohl der Rohrleitungsabschnitt 1 als auch der Rohrleitungsabschnitt 2 sind in Längsrichtung nicht bewegbar, da sie bereits mit ihren in Fig. 1 außen liegenden Enden an nicht gezeigten weiterführenden Rohrleitungsabschnitten befestigt sind.

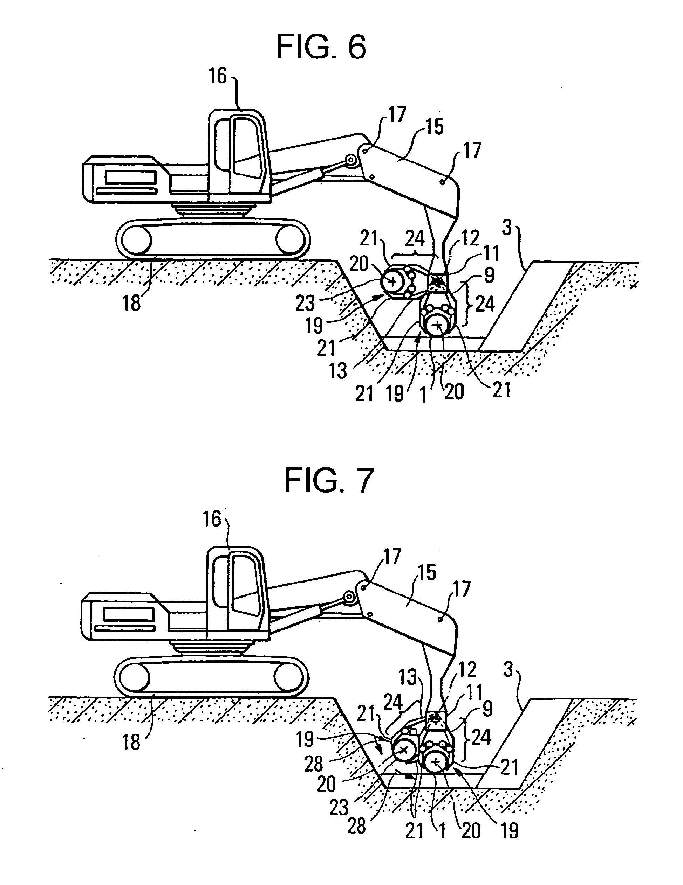

Die beiden zu verbindenden Enden 7, 8 der Rohrleitungsabschnitte 1, 2 werden jeweils an ihrer Außenseite von Halteelementen 9, 10 umgriffen und so gehalten, dass die Rohrleitungsabschnitte 1, 2 miteinander fluchten und somit zentriert zueinander ausgerichtet sind. Die Halteelemente 9, 10 sind dabei an einem gemeinsamen als Querträger ausgebildeten Basisteil 11 angeordnet und um eine gemeinsame Längsachse 12 des Basisteils 10 verschwenkbar, wie es insbesondere aus den Fig. 6 und 7 deutlicher zu erkennen ist. Die Halteelemente 9 und 10 sind jeweils im Bereich der äußeren Enden des Basisteils 11 angeordnet, so dass diese Halteelemente 9 und 10 im Weiteren auch als außen liegende Halteelemente 9, 10 bezeichnet werden.

An dem Basisteil 11 ist zwischen den außen liegenden Halteelementen 9, 10 ein weiteres innen liegendes Halteelement 13 sowie eine ebenfalls zwischen den außen liegenden Halteelementen 9 und 10 angeordnete Schneid- und Schweißvorrichtung 14 vorgesehen.

Das Basisteil 11 ist an einem Ausleger 15 eines Baggers 16 montiert, wobei der Ausleger 15 in üblicher Weise über Gelenke 17 (Fig. 6 und 7) in unterschiedliche Positionen verschwenkbar ist.

Der Bagger 16 besitzt weiterhin zwei Raupen 18, so dass der Bagger 16 und zusammen mit diesem die erfindungsgemäße Vorrichtung verfahren werden können. Wie insbesondere deutlicher aus den Fig. 6 und 7 hervorgeht, umfassen die Halteelemente 9, 10, 13 als Greifzangen 19 ausgebildete Halteabschnitte, wobei bei dem gezeigten Ausführungsbeispiel jedes Halteelement 9, 10 13 zwei entsprechende Greifzangen 19 umfasst.

Die Greifzangen 19 sind so ausgebildet, dass beim Umfassen eines Rohrleitungsabschnitts 1, 2 dessen Querschnittsmittelpunkt 20 automatisch immer an derselben Stelle in der Mitte zwischen den Backen 21 der jeweiligen Greifzange 19 zu liegen kommt, wie es in den Fig. 6 und 7 gezeigt ist.

Im Folgenden wird die Funktionsweise einer erfindungsgemäß ausgebildeten Vorrichtung zum Zusammensetzen und Verbinden von Rohrleitungsabschnitten näher beschrieben:

Um den Rohrleitungsabschnitt 1 mit dem in Fig. 1 nicht dargestellten, rechts außerhalb der Fig. 1 liegenden Vorbau zu verbinden, wird zunächst der Rohrleitungsabschnitt 2 auf eine Länge zugeschnitten, dass er problemlos in den Abstand zwischen dem Rohrleitungsabschnitt 1 und dem nicht dargestellten Vorbau eingesetzt und mit dem freien Ende des Vorbaus verbunden werden kann. Die Länge des Rohrleitungsabschnitts 2 wird dabei so gewählt, dass zwischen dem freien Ende 7 des Rohrleitungsabschnitts 1 und dem freien Ende 8 des Rohrleitungsabschnitts 2 ein erster vorgegebener Abstand 22 entsteht. Die genaue Abmessung dieses ersten vorgegebenen Abstands ist dabei nicht wesentlich, wesentlich ist nur, dass der Abstand kleiner als die Länge eines im Folgenden näher beschriebenen, vorgefertigten Passstücks 23 ist. Ist die definiert vorgegebene Länge des Passstücks 23 beispielsweise ein Meter, so kann der erste vorgegebene Abstand 22 beispielsweise einen beliebigen Wert zwischen 0,1 bis 0,9 Meter betragen.

Nach dem Verbinden des Rohrleitungsabschnitts 2 mit dem in Fig. 1 nicht dargestellten Vorbauende wird der Bagger 16 so in Höhe der beiden Ende 7, 8 der Rohrleitungsabschnitte 1, 2 positioniert, dass der Rohrleitungsabschnitt 1 von dem Halteelement 9 und der Rohrleitungsabschnitt 2 von dem Halteelement 10 umgriffen werden kann, wie es in Fig. 1 dargestellt ist. Dazu können zum einen der Ausleger 15 des Baggers 16 um seine Gelenke 17 und zum anderen die Halteelemente 9, 10 um die Längsachse 12 entsprechend verschwenkt werden. Da die Halteelemente 9, 10 die Rohrleitungsabschnitte 1, 2 umgreifen, können sie diese anheben und in die gewünschte zueinander zentrierte Position verbringen. Diese zentrierte Position wird mit der dargestellten Ausführungsform automatisch dadurch erreicht, dass die Halteelemente 9, 10 den gleichen wirksamen Halteabstand 24 besitzen und aufgrund der geschilderten Ausführung der Greifzangen 19 die Rohrleitungsabschnitte 1, 2 automatisch mittig zwischen den Backen 21 der Greifzangen 19 angeordnet sind.

Ist beispielsweise nach dem Verbinden des Rohrleitungsabschnitts 2 mit dem Vorbauende der Rohrleitungsabschnitt 2 gegenüber dem Rohrleitungsabschnitt 1 außermittig versetzt, so wird nach Ergreifen des Rohrleitungsabschnitts 1 durch das Halteelement 9 und des Rohrleitungsabschnitts 2 durch das Halteelement 10 sowie anschließendem Verschwenken des Halteelements 10 eine automatische Zentrierung der Rohrleitungsabschnitte 1 und 2 erreicht. Dabei ist lediglich dafür Sorge zu tragen, dass die Winkelpositionen der Halteelemente 9 und 10 übereinstimmen, da in diesem Fall automatisch die gewünschte Zentrierung erfolgt, wie es in Fig. 1 dargestellt ist. Dies kann durch eine entsprechende Steuerungsvorrichtung für die Halteelemente 9, 10 erreicht werden.

Nach dieser Zentrierung der Rohrleitungsabschnitte 1 und 2 werden die beiden Enden 7, 8 der Rohrleitungsabschnitte 1, 2 über die Schneid- und Schweißvorrichtung 14 jeweils so gekürzt, dass zwischen den Rohrleitungsabschnitten 1 und 2 ein zweiter, definiert vorgegebener Abstand 25 erzeugt wird, wie er in Fig. 2 dargestellt ist.

Wie in Fig. 1 dargestellt, besitzt die Schneid- und Schweißvorrichtung 14 eine Schneideinheit 26, die beispielsweise als Plasma- oder Autogenbrenner, als Laserschneideinheit oder als sonstige geeignete Schneideinheit ausgebildet sein kann.

Die Schneid- und Schweißvorrichtung 14 ist entlang des Basisteils 11 parallel zur Längsachse 12 verfahrbar angeordnet und kann demgemäß an die gewünschten Positionen verfahren werden, um die Rohrleitungsabschnitte 1 und 2 auf die gewünschten Längen zu kürzen. In Fig. 1 ist die Schneid- und Schweißvorrichtung 14 in der Position dargestellt, in der der Rohrleitungsabschnitt 2 entlang einer Schneidlinie 27 auf die in Fig. 2 dargestellte Länge gekürzt wird. Der Rohrleitungsabschnitt 1 wurde bereits in einem vorhergehenden Verfahrensschritt auf die gewünschte Länge abgeschnitten, wie es durch die gestrichelte Darstellung des ursprünglich über die gewünschte Länge hinaus stehenden Teils des Rohrleitungsabschnitts 1 in Fig. 1 dargestellt ist.

Grundsätzlich kann die Schneid- und Schweißvorrichtung 14 so ausgebildet sein, dass sie an dem inneren Halteelement 13 vorbei gefahren werden kann, um zwischen den gewünschten Schneidpositionen verfahren zu werden. Es ist jedoch auch möglich, dass das innen liegende Halteelement 13 ebenfalls entsprechend verfahren wird um eine geeignete Bewegung der Schneid- und Schweißvorrichtung 14 zu ermöglichen. Letztlich ist es auch möglich, dass zwei getrennte Schneid- und Schweißvorrichtungen 14, jeweils eine zu jeder Seite des innen liegenden Halteelements 13 vorgesehen sind. In diesem Falle können die Rohrleitungsabschnitte 1 und 2 gleichzeitig in einem einzigen Verfahrensschritt auf die gewünschten Längen gekürzt werden.

Nachdem über die Schneid- und Schweißvorrichtung 14 die Rohrleitungsabschnitte 1 und 2 so gekürzt wurden, dass zwischen ihnen der in Fig. 2 dargestellte zweite definiert vorgegebene Abstand 25 erzeugt wurde, wird die Schneid- und Schweißvorrichtung 14 in die in Fig. 2 gezeigte Stellung nach rechts verfahren, um das Einsetzen des Passstücks 23 in den Zwischenraum zwischen die Rohrleitungsabschnitte 1 und 2 zu ermöglichen.

Das Passstück 23 wird, wie es insbesondere in Fig. 6 zu erkennen ist, von dem innen gelegenen Halteelement 13 während des Schneidvorgangs so gehalten, dass es deutlich versetzt zu den zueinander zentriert angeordneten Rohrleitungsabschnitten 1 und 2 angeordnet ist. Vor dem Einsetzen des Passstücks 23 wird das innen liegende Halteelement 13 so lange entlang dem Basisteil 11 parallel zur Längsachse 12 verfahren, bis die außen liegenden Enden des Passstücks 23 exakt mit den abgeschnittenen Enden der Rohrleitungsabschnitte 1 und 2 fluchten. Die Ausrichtung des Passstücks 23 erfolgt dabei lasergesteuert.

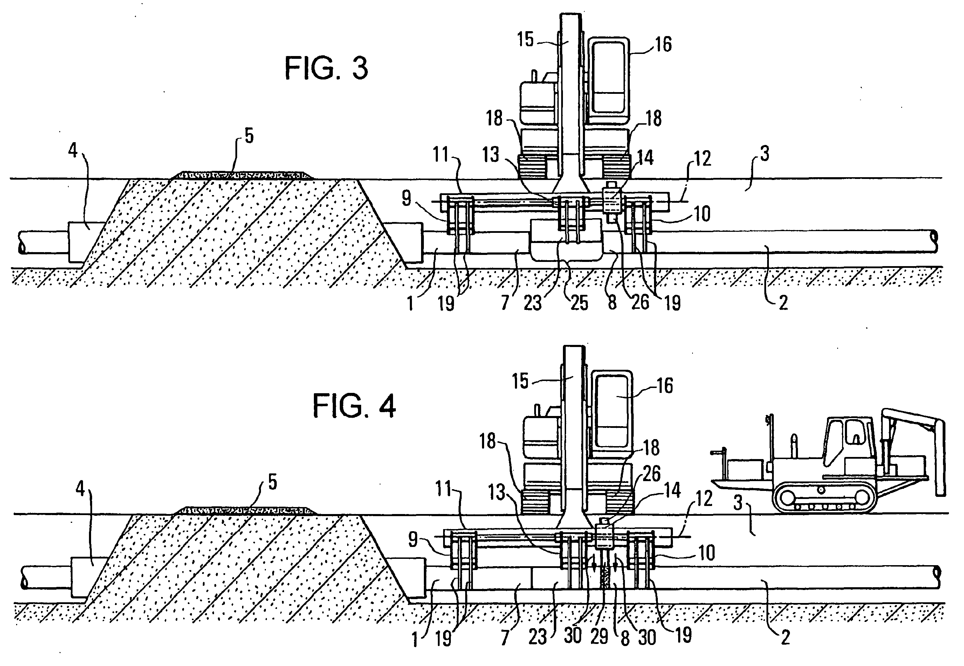

Nach erfolgter Ausrichtung wird das innen liegende Halteelement 13 gemäß Fig. 3 um die Längsachse 12 verschwenkt, wie es in Fig. 7 durch Pfeile 28 dargestellt ist. Da das innen liegende Halteelement 13 identisch zu den außen liegenden Halteelementen 9, 10 ausgebildet ist, erfolgt eine automatische Zentrierung zwischen dem Passstück 23 und den Rohrleitungsabschnitten 1 und 2, sobald das innen liegende Halteelement 13 die gleiche Winkelposition wie die außen liegenden Halteelemente 9, 10 erreicht hat. Weiterhin liegend die Enden des Passstücks 23 nach dem Einsetzen Stoß an Stoß mit den abgeschnittenen Enden der Rohrleitungsabschnitte 1 und 2, da der zweite definiert vorgegebene Abstand 25 gerade so eingestellt wurde, dass er der Länge des Passstücks 23 entspricht.

Nach dem vollständigen Verschwenken des innen liegenden Halteelements 13 erreicht das Passstück 23 somit die in Fig. 4 dargestellte Position, in der der Rohrleitungsabschnitt 1, das Passstück 23 und der Rohrleitungsabschnitt 2 exakt zueinander zentriert ausgerichtet sind. In diesem Zustand können der Rohrleitungsabschnitt 1, das Passstück 23 und der Rohrleitungsabschnitt 2 über ihren Umfang mittels der Schneid- und Schweißvorrichtung 14 miteinander verschweißt werden. Die Schneid-und Schweißvorrichtung 14 umfasst dazu einen Schweißkopf 29, der, wie in Fig. 4 dargestellt, in Richtung von Pfeilen 30 zu der Stoßstelle zwischen dem Rohrleitungsabschnitt 2 und dem Passstück 23 ausgefahren und im Sinne einer Orbitalschweißvorrichtung um die Stoßstelle herum verfahrbar ist.

Während des Schweißvorgangs werden der Rohrleitungsabschnitt 2 und das Passstück 23 von den Halteelementen 10 und 13 unverrückbar in einer exakt zueinander zentrierten Position gehalten, da das Halteelement 10 sowie das Halteelement 13 über das gemeinsame Basisteil 11 miteinander verbunden sind. Handelt es sich bei der Schneid- und Schweißvorrichtung 14 um eine Laserschweißvorrichtung, so ist es möglich, durch die Halteelemente 10 und 13 den Rohrleitungsabschnitt 2 gegenüber dem Passstück 23 unter Vorspannung zu halten, da die Halteelemente 10 und 13 gegeneinander parallel zur Längsachse 12 verfahrbar sind.

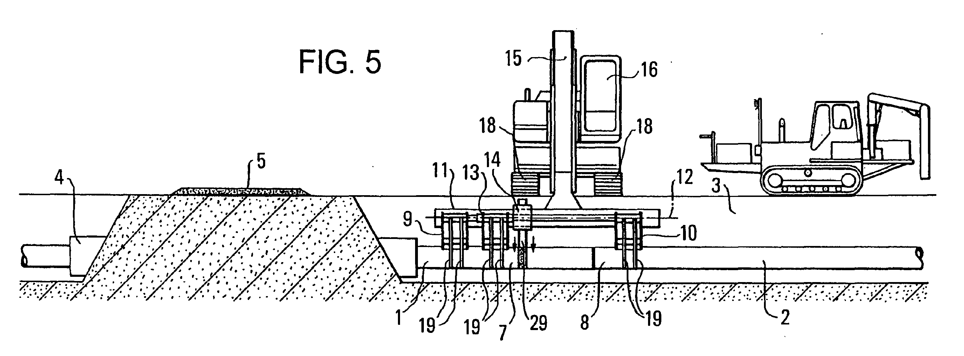

Nachdem der Rohrleitungsabschnitt 2 und das Passstück 23 miteinander verschweißt sind, wird die Schneid- und Schweißvorrichtung 14 in die in Fig. 5 gezeigte Position an der Nahtstelle zwischen dem Rohrleitungsabschnitt 1 und dem Passstück 23 verfahren, welche in gleicher Weise miteinander verschweißt werden. Das innen liegende Halteelement 13 kann dabei, wie in Fig. 5 gezeigt, ebenfalls nach links verfahren werden, um ein entsprechendes Verfahren der Schneid- und Schweißvorrichtung 14 zu ermöglichen. Grundsätzlich ist es auch möglich, dass die Schneid- und Schweißvorrichtung 14 so ausgebildet und an dem Basisteil 11 geführt werden kann, dass das innen liegende Halteelement 13 in der in Fig. 4 gezeigten Position verbleiben und das einseitig bereits befestigte Passstück 23 weiter in der gewünschten Position fixieren kann. Ebenso ist es möglich, dass eine zweite Schneid- und Schweißvorrichtung 14 zwischen dem außen liegenden Halteelement 9 und dem innen liegenden Halteelement 13 angeordnet ist.

Während zu dem gezeigten Ausführungsbeispiel beschrieben wurde, dass die Schneid- und Schweißvorrichtungen als einheitliche Vorrichtung ausgebildet sind, können diese auch als getrennte Vorrichtungen ausgebildet sein.

Dadurch, dass die Halteelemente 9, 10 und 13 an dem gemeinsamen Basisteil 11 angebracht sind, kann die beim Laserschweißen erforderliche gewünschte Vorspannung zwischen den jeweils miteinander zu verschweißenden Teilen in genau definierter Weise erzeugt und beibehalten werden.

Nach vollständigem Verschweißen der Rohrleitungsabschnitte 1 und 2 mit dem Passstück 23 können die Greifzangen 19 der Halteelemente 9, 10 und 13 geöffnet und die Rohrleitungen 1 und 2 mit dem Passstück 23 damit freigegeben werden. Anschließend kann der Bagger 16 zu der nächsten Verbindungsstelle verfahren werden, wo der nächste Rohrleitungsabschnitt in gleicher Weise mit dem freien Ende des Rohrleitungsabschnitts 1 zentriert und verschweißt wird.

### Bezugszeichenliste

- 1: Rohrleitungsabschnitt
- 2: Rohrleitungsabschnitt
- 3: Graben
- 4: Schutzrohr
- 5: Straße
- 7: Ende des Rohrleitungsabschnitts 1
- 8: Ende des Rohrleitungsabschnitts 2
- 9: außen liegendes Halteelement
- 10: außen liegendes Halteelement
- 11: Basisteil
- 12: Längsachse/Schwenkachse
- 13: innen liegendes Halteelement
- 14: Schneidvorrichtung bzw. Schneid- und Schweißvorrichtung
- 15: Ausleger
- 16: Bagger
- 17: Gelenke
- 18: Raupen
- 19: Greifzange
- 20: Querschnittsmittelpunkt/Mittelachse
- 21: Backen
- 22: erster vorgegebener Abstand
- 23: Passstück
- 24: wirksamer Halteabstand
- 25: zweiter definierter vorgegebener Abstand
- 26: Schneideinheit
- 27: Schneidlinie
- 28: Pfeile
- 29: Schweißkopf
- 30: Pfeile

## Patentansprüche

1. Vorrichtung zum Zusammensetzen von Rohrleitungsabschnitten (1, 2, 23),
wobei die Vorrichtung ein gemeinsames Basisteil (11) aufweist, an dem zumindest zwei außen liegende Halteelemente (9, 10) sowie ein bewegbares und zwischen diesen angeordnetes, innen liegendes Halteelement (13) angeordnet sind,
wobei an dem Basisteil (11) zwischen den beiden außen liegenden Halteelementen (9, 10) zumindest eine Schneidvorrichtung (14) vorgesehen ist, und
wobei über das innen liegende Halteelement (13) ein als Passstück vorgefertigter innerer Rohrleitungsabschnitt (23) in den Zwischenraum zwischen den beiden äußeren Rohrleitungsabschnitten (1, 2) einsetzbar ist, wobei das Passstück (23) durch das innen liegende Halteelement (13) zu den beiden äußeren Rohrleitungsabschnitten (1, 2) zentrierbar ist,
**dadurch gekennzeichnet,**
**dass** die Halteelemente (9, 10, 13) jeweils zum Ergreifen und Positionieren eines Rohrleitungsabschnitts (1, 2, 23) ausgebildet sind, dass die Halteelemente (9, 10, 13) gegenüber dem Basisteil (11) sowie gegeneinander so bewegbar sind, dass zwei von den Halteelementen (9, 10) gehaltene äußere Rohrleitungsabschnitte (1, 2) in einem ersten vorgegebenen Abstand (22) zueinander zentrierbar sind, dass durch Abschneiden von einem oder beiden der einander zugewandter Enden (7, 8) der äußeren Rohrleitungsabschnitte (1, 2) mittels der Schneidvorrichtung (14) ein zweiter definiert vorgegebener Abstand (25) zwischen den Rohrleitungsabschnitten (1, 2) einstellbar ist, und
**dass** die Halteelemente (9, 10, 13) gegenüber dem Basisteil (11), insbesondere um eine gemeinsame Achse (12), verschwenkbar ausgebildet sind.

2. Vorrichtung nach Anspruch 1,
**dadurch gekennzeichnet,**
**dass** die Halteelemente (9, 10, 13) zum automatischen Zentrieren der Rohrleitungsabschnitte (1, 2, 23) ausgebildet sind.

3. Vorrichtung nach Anspruch 2,
**dadurch gekennzeichnet,**
**dass** der wirksame Halteabstand (24), d.h. der Abstand zwischen der Schwenkachse (12) des Halteelements (9, 10, 13) und der Mittelachse (20) eines gehaltenen Rohrleitungsabschnitts (1, 2, 23), für zwei Halteelemente (9, 10, 13), insbesondere für alle Halteelemente (9, 10, 13) gleich groß ist.

4. Vorrichtung nach einem der vorhergehenden Ansprüche,
**dadurch gekennzeichnet,**
**dass** die Halteelemente (9, 10, 13) Halteabschnitte zum Ergreifen der Außenseite der Rohrleitungsabschnitte umfassen.

5. Vorrichtung nach Anspruch 4,
**dadurch gekennzeichnet,**
**dass** zumindest ein Teil der Halteabschnitte als Greifelemente, insbesondere als Greifzangen (19) oder Greifbacken ausgebildet sind.

6. Vorrichtung nach Anspruch 4 oder 5,
**dadurch gekennzeichnet,**
**dass** zumindest ein Teil der Halteabschnitte als Vakuumgreifer ausgebildet sind.

7. Vorrichtung nach einem der Ansprüche 4 bis 6,
**dadurch gekennzeichnet,**
**dass** der Halteabschnitt eines Halteelements (9, 10, 13) gegenüber dem restlichen Bereich des Halteelements verkippbar ausgebildet ist.

8. Vorrichtung einem der vorhergehenden Ansprüche,
**dadurch gekennzeichnet,**
**dass** an dem Basisteil (11), insbesondere zwischen den außen (9, 10) liegenden Halteelementen, mindestens eine Schweißvorrichtung (14) zum Verschweißen der äußeren Rohrleitungsabschnitte (1, 2) mit dem dazwischen angeordneten inneren Rohrleitungsabschnitt (23) vorgesehen ist.

9. Vorrichtung nach Anspruch 8,
**dadurch gekennzeichnet,**
**dass** die Schweißvorrichtung (14) als Laserschweißvorrichtung ausgebildet ist.

10. Vorrichtung nach Anspruch 8 oder 9,
**dadurch gekennzeichnet,**
**dass** die Schweißvorrichtung (14) als Orbitalschweißvorrichtung ausgebildet ist.

11. Vorrichtung nach einem der vorhergehenden Ansprüche,
**dadurch gekennzeichnet,**
**dass** die Halteelemente (9, 10, 13) gegeneinander so bewegbar sind, dass zwei zueinander zentrierte, von den Halteelementen gehaltene Rohrleitungsabschnitte (1, 23; 23, 2) unter Vorspannung gegeneinander anpressbar sind.

12. Vorrichtung nach Anspruch 11,
**dadurch gekennzeichnet,**
**dass** die Halteelemente (9, 10, 13) entlang des Basisteils (11) gegeneinander verfahrbar ausgebildet sind.

13. Vorrichtung nach einem der vorhergehenden Ansprüche,
**dadurch gekennzeichnet,**
**dass** die Schneidvorrichtung (14) einen Plasmabrenner umfasst.

14. Vorrichtung nach einem der vorhergehenden Ansprüche,
**dadurch gekennzeichnet,**
**dass** an dem Basisteil (11) vier, fünf oder mehr Halteelemente (9, 10, 13) vorgesehen sind.

15. Vorrichtung nach einem der vorhergehenden Ansprüche,
**dadurch gekennzeichnet,**
**dass** die Vorrichtung zur Montage an einem insbesondere verfahrbaren Unterbau, beispielsweise an einem Standardbagger (16) oder an einer Standardraupe, ausgebildet ist.

16. Verfahren zum Verbinden von Rohrleitungsabschnitten (1, 2, 23), insbesondere mit einer Vorrichtung nach einem der vorhergehenden Ansprüche,
wobei zwei äußere Rohrleitungsabschnitte (1, 2) in gegenüber einem Basisteil (11) der Vorrichtung verschwenkbar ausgebildeten Halteelementen (9, 10, 13) der Vorrichtung gehalten werden und durch Verschwenken zumindest eines der Halteelemente (9, 10, 13) in einem ersten vorgegebenen Abstand (22) zueinander zentriert werden,
wobei eines oder beide der einander zugewandten Enden (7, 8) der beiden äußeren Rohrleitungsabschnitte (1, 2) so abgeschnitten werden, dass ein zweiter definiert vorgegebener Abstand (25) zwischen den Rohrleitungsabschnitten (1, 2) erzeugt wird,
wobei ein als Passstück vorgefertigter innerer Rohrleitungsabschnitt (23) in den Zwischenraum zwischen den beiden äußeren Rohrleitungsabschnitten (1, 2) zentriert zu diesen eingesetzt wird
und wobei die äußeren Rohrleitungsabschnitte (1, 2) mit dem dazwischen liegenden inneren Rohrleitungsabschnitt (23) verbunden werden.

17. Verfahren nach Anspruch 16,
**dadurch gekennzeichnet,**
**dass** die äußeren Rohrleitungsabschnitte (1, 2) mit dem dazwischen liegenden inneren Rohrleitungsabschnitt (23) verschweißt werden.

## Claims

1. An apparatus for the assembly of pipe sections (1, 2, 23),
wherein the apparatus has a common base part (11) at which at least two outwardly disposed holding elements (9, 10) as well as a movable inwardly disposed holding element (13)arranged between them are arranged;
wherein at least one cutting apparatus (14) is provided between the two outwardly disposed holding elements (9, 10); and
wherein an inner pipe section (23) prefabricated as a joining member can be inserted via the inwardly disposed holding element (13) into the intermediate space between the two outer pipe sections (1, 2), with the joining member (23) being able to be centred with respect to the two outer pipe sections (1, 2) by the inwardly disposed holding element (13),
**characterised in that**
the holding elements (9, 10, 13) are each made for the gripping and positioning of a pipe section (1, 2, 23);
**in that** the holding elements (9, 10, 13) are movable with respect to the base part (11) as well as with respect to one another such that two outer pipe sections (1, 2) held by the holding elements (9, 10) can be centred at a first preset spacing (22) from one another;
**in that** a second spacing which is preset in a defined manner can beset between the pipe sections by cutting one or both of the mutually facing ends (7, 8) of the outer pipe sections (1, 2) by means of the cutting apparatus (14); and
**in that** the holding elements (9, 10, 13) are made pivotable with respect to the base part, in particular about a common axis (12).

2. An apparatus in accordance with claim 1, **characterised in that** the holding elements (9, 10, 13) are made for the automatic centring of the pipe sections (1, 2, 23).

3. An apparatus in accordance with claim 2, **characterised in that** the effective holding distance (24), i.e. the distance between the pivot axis (12) of the holding element (9, 10, 13) and of the centre axis (20) of a held pipe section (1, 2, 23) is of the same size for two holding elements (9, 10, 13), in particular for all holding elements (9, 10, 13).

4. An apparatus in accordance with any one of the preceding claims, **characterised in that** the holding elements (9, 10, 13) include holding sections for the gripping of the outer side of the pipe sections.

5. An apparatus in accordance with claim 4, **characterised in that** at least some of the holding sections are made as gripping elements, in particular as gripping tongs (19) or gripping jaws.

6. An apparatus in accordance with claim 4 or claim 5, **characterised in that** at least some of the holding sections are made as vacuum grippers.

7. An apparatus in accordance with any one of the claims 4 to 6, **characterised in that** the holding section of a holding element (9, 10, 13) is made tiltable with respect to the remaining region of the holding element.

8. An apparatus in accordance with any one of the preceding claims, **characterised in that** at least one welding apparatus (14) is provided at the base part (11), in particular between the outwardly (9, 10) disposed holding elements, for the welding of the outer pipe sections (1, 2) to the inner pipe section (23) arranged therebetween.

9. An apparatus in accordance with claim 8, **characterised in that** the welding apparatus (14) is made as a laser welding apparatus.

10. An apparatus in accordance with claim 8 or claim 9, **characterised in that** the welding apparatus (14) is made as an orbital welding apparatus.

11. An apparatus in accordance with any one of the preceding claims, **characterised in that** the holding elements (9, 10, 13) are movable with respect to one another such that two mutually centred pipe sections (1, 23; 23, 2) held by the holding elements can be pressed toward one another prestress.

12. An apparatus in accordance with claim 11, **characterised in that** the holding elements (9, 10, 13) are made mutually movable along the base part (11).

13. An apparatus in accordance with any one of the preceding claims, **characterised in that** the cutting apparatus includes a plasma torch.

14. An apparatus in accordance with any one of the preceding claims, **characterised in that** four, five or more holding elements (9, 10, 13) are provided at the base part (11).

15. An apparatus in accordance with any one of the preceding claims, **characterised in that** the apparatus is made for installation at a substructure, in particular at a movable substructure, for example at a standard excavator (16) or at a standard crawler.

16. A method for the connection of pipe sections (1, 2, 23), in particular using an apparatus in accordance with any one of the preceding claims,
wherein two outer pipe sections (1, 2) are held in holding elements (9, 10, 13) of the apparatus made pivotable with respect to a base part (11) of the apparatus and wherein at least one of the holding elements (9, 10, 13) are centred at a first preset spacing (22) from one another by pivoting at least one of the holding elements (9, 10, 13);
wherein one or both of the mutually facing ends (7, 8) of the two outer pipe sections (1, 2) are cut off so that a second spacing (25) preset in a defined manner is produced between the pipe sections (1, 2);
wherein an inner pipe section (23) prefabricated as a joining member is inserted into the intermediate space between the two outer pipe sections (1, 2) centred with respect to them;
and wherein the outer pipe sections (1, 2) are connected to the inner pipe section (22) disposed therebetween.

17. A method in accordance with claim 16, **characterised in that** the outer pipe sections (1, 2) are welded to the inner pipe section (23) disposed therebetween.

## Revendications

1. Dispositif pour l'assemblage de tronçons de conduits tubulaires (1, 2, 23),
dans lequel le dispositif comprend une partie de base commune (11) sur laquelle sont agencés au moins deux éléments de maintien (9, 10) situés à l'extérieur ainsi qu'un élément de maintien (13) mobile et agencé entre ces derniers,
dans lequel il est prévu au moins un dispositif de coupe (14) sur la partie de base (11) entre les deux éléments de maintien (9, 10) situés à l'extérieur, et
dans lequel via l'élément de maintien (13) situé à l'intérieur un tronçon de conduit tubulaire intérieur préfabriqué sous forme de pièce ajustée (23) peut être mis en place dans l'espace intermédiaire entre les deux tronçons de conduits tubulaires (1, 2) extérieurs, et la pièce ajustée (23) est susceptible d'être centrée par rapport aux deux tronçons de conduits tubulaires extérieurs (1, 2) au moyen de l'élément de maintien (13) situé à l'intérieur,
**caractérisé en ce que** les éléments de maintien (9, 10, 13) sont réalisés chacun pour saisir et positionner un tronçon de conduit tubulaire (1,2,23),
**en ce que** les éléments de maintien (9, 10, 13) sont déplaçables par rapport à la partie de base (11) et les uns par rapport aux autres de telle façon que deux tronçons de conduits tubulaires (1, 2) extérieurs maintenus par les éléments de maintien (9, 10) sont susceptibles d'être centrés l'un par rapport à l'autre à une première distance prédéterminée (22),
**en ce que** par découpe d'une extrémité ou des deux extrémités (7, 8) tournées l'une vers l'autre des tronçons de conduits tubulaires extérieurs (1, 2) au moyen du dispositif de coupe (14), une seconde distance prédéterminée définie (25) peut être établie entre les tronçons de conduits tubulaires (1, 2), et
**en ce que** les éléments de maintien (9, 10, 13) sont réalisés de manière à pouvoir pivoter par rapport à la partie de base (11), en particulier autour d'un axe commun (12).

2. Dispositif selon la revendication 1,
**caractérisé en ce que** les éléments de maintien (9, 10, 13) sont réalisés en vue d'un centrage automatique des tronçons de conduits tubulaires (1,2,23).

3. Dispositif selon la revendication 2,
**caractérisé en ce que** la distance de maintien efficace (24), c'est-à-dire la distance entre l'axe de pivotement (12) de l'élément de maintien (9, 10, 13) et l'axe médian (20) d'un tronçon de conduit tubulaire (1, 2, 23) maintenu, est égale pour deux éléments de maintien (9, 10, 13), en particulier pour tous les éléments de maintien (9, 10, 13).

4. Dispositif selon l'une des revendications précédentes,
**caractérisé en ce que** les éléments de maintien (9, 10, 13) comprennent des tronçons de maintien pour saisir la face extérieure des tronçons de conduits tubulaires.

5. Dispositif selon la revendication 4,
**caractérisé en ce qu'**au moins une partie des tronçons de maintien sont réalisés sous forme d'éléments de préhension, en particulier sous forme de pinces de préhension (19) ou de mâchoires de préhension.

6. Dispositif selon la revendication 4 ou 5,
**caractérisé en ce qu'**une partie au moins des tronçons de maintien sont réalisés sous forme d'éléments de préhension à vide.

7. Dispositif selon l'une des revendications 4 à 6,
**caractérisé en ce que** le tronçon de maintien d'un élément de maintien (9, 10, 13) est réalisé de manière à pouvoir basculer par rapport à la zone restante de l'élément de maintien.

8. Dispositif selon l'une des revendications précédentes,
**caractérisé en ce qu'**il est prévu au moins un dispositif de soudage (14) sur la partie de base (11), en particulier entre les éléments de maintien (9, 10) situés à l'extérieur, pour souder les tronçons de conduits tubulaires extérieurs (1, 2) avec le tronçon de conduit tubulaire intérieur (23) agencé entre eux.

9. Dispositif selon la revendication 8,
**caractérisé en ce que** le dispositif de soudage (14) est réalisé sous forme de dispositif de soudage au laser.

10. Dispositif selon la revendication 8 ou 9,
**caractérisé en ce que** le dispositif de soudage (14) est réalisé sous forme de dispositif de soudage orbital.

11. Dispositif selon l'une des revendications précédentes,
**caractérisé en ce que** les éléments de maintien (9, 10, 13) sont déplaçables les uns par rapport aux autres de telle façon que deux tronçons de conduits tubulaires (1, 23 ; 23, 2) centrés l'un par rapport à l'autre et maintenus par les éléments de maintien sont susceptibles d'être pressés l'un contre l'autre sous précontrainte.

12. Dispositif selon la revendication 11,
**caractérisé en ce que** les éléments de maintien (9, 10, 13) sont réalisés de manière déplaçable les uns par rapport aux autres le long de la partie de base (11).

13. Dispositif selon l'une des revendications précédentes,
**caractérisé en ce que** le dispositif de coupe (14) comprend une torche à plasma.

14. Dispositif selon l'une des revendications précédentes,
**caractérisé en ce qu'**il est prévu quatre, cinq éléments de maintien (9, 10, 13) ou plus sur la partie de base (11).

15. Dispositif selon l'une des revendications précédentes,
**caractérisé en ce que** le dispositif est réalisé en vue du montage sur une structure sous-jacente, en particulier déplaçable, par exemple sur une excavatrice standard (16) ou un appareil à chenilles standard.

16. Procédé pour raccorder des tronçons de conduits tubulaires (1, 2, 23), en particulier avec un dispositif selon l'une des revendications précédentes,
dans lequel deux tronçons de conduits tubulaires extérieurs (1, 2) sont maintenus dans des éléments de maintien (9, 10, 13) du dispositif, réalisés avec possibilité de pivotement par rapport à une partie de base (11) du dispositif, et sont centrés l'un par rapport à l'autre par pivotement de l'un au moins des éléments de maintien (9, 10, 13), à une première distance prédéterminée (22), dans lequel l'une des extrémités ou les deux extrémités (7, 8), tournées l'une vers l'autre, des deux tronçons de conduits tubulaires extérieurs (1, 2) sont coupées de manière à engendrer une seconde distance prédéterminée définie (25) entre les tronçons de conduits tubulaires (1, 2),
dans lequel un tronçon de conduit tubulaire intérieur (23) préfabriqué sous forme de pièce ajustée est mis en place dans l'espace intermédiaire entre les deux tronçons de conduits tubulaires extérieurs (1, 2) de manière centrée par rapport à ceux-ci, et dans lequel les tronçons de conduits tubulaires extérieurs (1, 2) sont reliés au tronçon de conduit tubulaire intérieur (28) situé entre eux.

17. Procédé selon la revendication 16,
**caractérisé en ce que** les tronçons de conduits tubulaires extérieurs (1, 2) sont soudés avec le tronçon de conduit tubulaire intérieur (23) situé entre eux.
